Europäisches Patentamt

European Patent Office

Office européen des brevets

(11) Publication number: 0 274 750
A2

# EUROPEAN PATENT APPLICATION

(21) Application number: 87119325.6

(22) Date of filing: 29.12.87

(51) Int. Cl.⁴: G02B 6/28 , G02B 6/12 , H04L 5/14

(30) Priority: 30.12.86 CS 10294/86

(43) Date of publication of application: 20.07.88 Bulletin 88/29

(84) Designated Contracting States: DE FR GB IT NL SE

(71) Applicant: Tesla, Koncernovy Podnik No. 186 Podebradska Praha 9(CS)

(72) Inventor: Schröfel, Josef, Dipl.-Ing. Praha 7 Obráncu Miru 82(CS)
Inventor: Vavruska, Petr Velim Karlova 142(CS)

(74) Representative: Patentanwälte Beetz sen. - Beetz jun. Timpe - Siegfried - Schmitt-Fumian Steinsdorfstrasse 10 D-8000 München 22(DE)

(54) Circuit arrangement of an integrated coupling circuit for duplex optical communication.

(57) The invention relates to planar integrated coupling circuits. A planar integrated optical circuit comprises at least a first planar duplex combining/branching circuit (1) which comprises a first planar inlet/outlet (109, 110) being connected to a first optical fiber circuit (A) and a second planar inlet/outlet (111, 112) which is connected to a second optical fiber circuit (B) and in case of an extension of the planar integrated circuit a third planar inlet/outlet (113, 114) is connected to a first outlet/inlet (210, 209) of a second planar duplex combining/branching circuit (2) of identical interconnection as the first planar duplex combining/branching circuit (1). In case of a further extension of the integrated circuit a third inlet/outlet 213, 214 of the second planar duplex combining/branching circuit (2) is connected to a first outlet/inlet of a following planar duplex combining/branching circuit (N).

This planar integrated circuit can be used for communication and telecommunication networks of any multipoint configuration for a quick optical communication of processors and of systems, the basis of which is a combining and branching of optical duplex and semiduplex communications.

## Circuit arrangement of an integrated coupling circuit for duplex optical communication

The invention relates to a circuit arrangement of an integrated coupling circuit for optical duplex communication for utilization at an arrangement of distributed local and long distance optical systems operating with a multifold access on bidirectional lines with two wave guides.

It is common knowledge that the duplex communication eliminates the difference between local and telecommunication at multipoint circuits of the bus type and reduces substantially the control of telecommunication protocols. The same holds true also for photo-optical systems with multifold access on the so called bidirectional lines with two wave guides, where each participant transmits in both directions and in case of a stable alternative also receives from one or the other direction.

A similar structure can in case of need be modified by means of junction points to a star shaped or branched circuit with an independent wave guide for transmission and receipt in more branches. The advantages of this type of communication cannot be actually fully utilized as there is actually no knowledge of a construction of an optical element of similar properties which could be manufactured in large series.

Known coupling elements for a similar optical duplex communication can be manufactured with difficulties only on the basis of welded fiber elements, mixing rods or plates and elements on the basis of cylindrical gradient lenses. None of the known coupling elements is manufactured by the fully planar technology.

It is an object of this invention to provide a circuit arrangement of a planar integrated coupling circuit for optical duplex communication in distributed processor networks with multifold access at bidirectional lines with two wave guides.

According to this invention the planar optical integrated circuit comprises at least a first planar duplex combining/branching circuit formed by a first planar branching element which is connected by its first outlet to a second inlet of a second planar combining element and by its second outlet to a second inlet of a third planar combining element, a second planar branching element which is connected by its first outlet to a first inlet of the second planar combining element and by its second outlet to a first inlet of a first planar combining element, a third planar branching element which is by its first outlet connected to a first inlet of the third planar combining element and by its second outlet to a second inlet of the first planar combining element, wherein the first planar duplex combining branching circuit comprises a first planar inlet/outlet formed by the inlet of the first planar branching element and the outlet of the first planar combining element, respectively, which are connected to a first optical fiber circuit and a second planar inlet/outlet formed by the inlet of the second planar branching element and the outlet of the third planar combining element, respectively, which are connected to a second optical fiber circuit, and a third planar inlet/outlet which is formed by the inlet of the third planar branching element and by the outlet of the second planar combining element, respectively, which are connected either directly to a third optical fiber circuit or in case of an extension of the planar integrated circuit by way of a planar coupling to a first planar outlet/inlet of a second planar duplex combining/branching circuit comprising three planar combining elements and three planar branching elements their interconnection being identical with the interconnection of the planar combining and branching elements of the first planar duplex combining/branching circuit whereby the second planar inlet/outlet of said second planar duplex combining/ branching circuit is connected with the third optical fiber circuit and its third planar inlet/outlet is connected either to a fourth optical fiber circuit or in case of a further extension of the optical integrated circuit by a planar coupling to the first outlet/inlet of a following planar duplex combining/branching circuit.

An advantage of the circuit arrangement of the planar integrated coupling circuit for optical duplex communication in distributed processor networks according to this invention is the circumstance that it enables its cascade alignment to an extensible optical integrated coupling circuit which can be fully manufactured by planar technology, enabling in its internal structure a substantial reduction of the coupling attenuation due to elimination of transitions with different cross sections and other optical losses due to curved wave-guides, as all planar interconnections of combining and branching elements can be solved by straight lines. There is a further advantage as it is possible to provide in the integrated circuit to adjust the mutual relation of the branching, inserted and optical coupling attenuation between individual inlets and outlets according to need and that the stations connected to this circuit can communicate in a full duplex by way of an optimalized attenuation complying with the given circuit arrangement of any bus, branched or star shaped configuration of not only local but also of telecommunication networks. The given circuit arrangement simplifies also the control of telecommunication protocols and creates conditions for forming new circuit arrangements of optical communications systems.

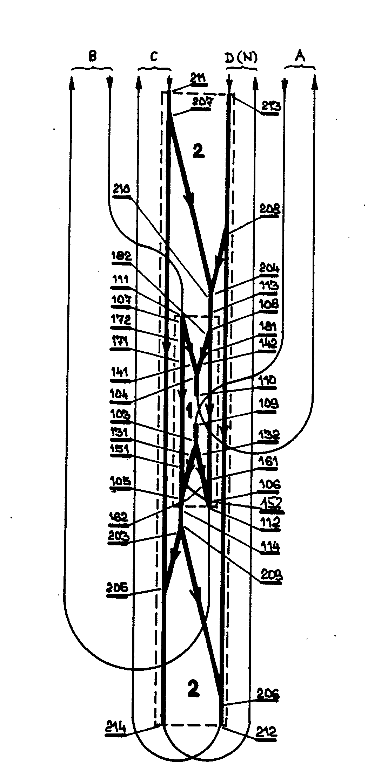

The attached drawing shows a circuit arrangement of an optical integrated coupling circuit according to this invention, the internal structure of which, composed of planar interconnected combining and branching elements, is drawn by heavier lines and the outlets of optical fiber circuits therefrom by thinner lines.

In case of a planar integrated coupling circuit for duplex optical communication in distributed processor networks with multifold access on bidirectional lines with two wave guides as shown in the drawing, the planar optical integrated circuit is composed of at least the first planar combining/branching circuit 1, formed by a first planar branching element 103 which is by its first outlet 131 connected to a second inlet 152 of a second planar combining element 105 and by its second outlet 132 to the second inlet 162 of a third planar combining element 106.

The second planar branching element 107 is by its first outlet 171 connected to the first inlet 151 of the second planar combining element 105 and by its second outlet 172 to the first inlet 141 of the first planar combining element 104.

The third planar branching element 108 is by its first outlet 181 connected to the first inlet 161 of the third planar combining element 106 and by its second outlet 182 to the second outlet 142 of the first planar combining element 104.

The object of the described circuit arrangement is a substantial reduction of the coupling attenuation due to elimination of optical transitions of unequal cross section and of further optical losses due to curved wave guides, as all planar interconnections of combining and branching elements can be solved by straight lines and furthermore the possibility of an adjustment of mutual relations of the branching, inserted and coupling optical attenuation between individual inlets and outlets.

The first planar duplex combining/branching circuit 1 is by its first planar inlet/outlet 109/110 formed by the inlet of the first branching element 103 and by the outlet of the first planar combining element 104 connected to a first optical fiber circuit A and by its second planar inlet/outlet 111/112 formed by the inlet of the second planar branching element 107 and by the outlet of the third planar combining element 106, is by way of said second planar inlet/outlet 111/112 connected to a second optical fiber circuit B whereby the third planar inlet/outlet 113/114, formed by the inlet of the third planar branching element 108 and by the outlet of the second planar combining element 105, is connected to a third optical fiber circuit C, of course only in case of a branching/combining of the signal at the branching of one bidirectional line with two wave guides.

The third planar inlet/outlet 113/114 is in case of expansion of the planar integrated circuit connected by a planar coupling to the first planar outlet/inlet 210/209 of the second planar duplex combining/branching circuit 2 composed of three planar combining elements 204, 205, 206 and of three planar branching elements 203, 207, 208 of identical interconnection as the first planar duplex combining/branching circuit 1, whereby the second planar inlet/outlet 211/212 of said duplex planar combining/branching circuit 2 is in this case connected with a third optical fiber circuit C and its third planar inlet/outlet 213/214 is connected either to a fourth optical fiber circuit D or in case of a further extension of the integrated optical circuit by a planar coupling to the first outlet/inlet of a following, on the drawing not shown, planar duplex combining/branching circuit.

The reason of a similar interconnection of planar duplex combining/branching circuits is the provision of a possibility of any required extension of the optical integrated circuit with all advantages already mentioned at the description of the first planar duplex combining/branching circuit 1 in case more complicated communication systems with duplex branching to more directions are required.

The optical signal entering in case of this circuit arrangement by way of the first inlet channel of the first optical planar circuit A enters the first planar duplex combining/branching circuit 1 over the first planar inlet 109 to the inlet of the first branching element 103, where it passes over the first branch to the third planar combining element 106, passes furthermore over the second planar outlet 112 of the first planar duplex combining/branching circuit 1 to the outlet channel of the second fiber circuit B and by way of the second branch to the inlet of the second planar combining element 105 and over its outlet furthermore to the third planar outlet 104 of the first planar duplex combining/branching circuit 1, enters the second planar duplex planar combining/branching circuit 2 over its first planar inlet 209, is divided furthermore in the first planar branching element 203 wherefrom it emerges over a first branch by way of the third planar combining element 206, the second planar outlet 212 of the second planar duplex combining/branching circuit 2 to the outlet channel of the third optical fiber circuit C and by the second branch to the second planar combining element 205. By way of the third planar outlet 214 of the second planar duplex combining/branching circuit 2 it leads either into the outlet channel D of a fourth optical fiber circuit, as indicated in the drawing, or in case of a further extension of the planar integrated coupling circuit to the first planar inlet of the following, in the drawing already not shown, planar duplex combining circuit, where the signal is in the same way divided to further outlets.

In the same manner the signal leading alternatively from the outlet channel of any optical fiber circuit is divided, i.e. said signal enters simultaneously outlet channels of all optical fiber circuits with exception of just the channel which is the source of this signal, enabling a fully duplex communication of any couple of stations connected to the described integrated circuit or to any optical distributed network of any configuration composed of said integrated circuits.

The object of this invention can be utilized for forming local passive, active and combined optical networks LON and telecommunication networks of any multipoint, star shaped and loop structure for a quick optical communication of processors, bases of knowledge, telemetric systems and systems for remote control with a high degree of safety against interruption, for branching of long distance optical tracks and in all other applications, the basic requirement of which is composing and branching of optical duplex and semiduplex communications while eliminating commutation means, junction computers included, where the commutation is replaced by direct addressing.

Index of reference marks
A first optical fiber circuit
B second optical fiber circuit
C third optical fiber circuit
D fourth optical fiber circuit
1 first planar duplex combining/branching circuit
2 second planar duplex combining/branching circuit
N nth planar duplex combining/branching circuit
103 first planar branching element of the first planar duplex combining/branching circuit 1
104 first planar combining element of the first planar duplex combining/branching element 1
105 second planar combination element thereof
106 third planar combining element thereof
107 second planar branching element thereof
108 third planar branching element thereof
109 first planar inlet thereof
110 first planar outlet thereof
111 second planar inlet thereof
112 second planar outlet thereof
113 third planar inlet thereof
114 third planar outlet thereof
131 first outlet of the first planar branching element 103
132 second outlet of the first planar branching element 103
141 first inlet of the first planar combining element 104
142 second inlet of the first planar combining element 104
151 first inlet of the second planar combining element 105

152 second inlet of the second planar combining element 105
161 first inlet of the third planar combining element 106
162 second inlet of the third planar combining element 106
171 first outlet of the second planar branching element 107
172 second outlet of the second planar branching element 107
181 first outlet of the third planar branching element 108
182 second outlet of the third planar branching element 108
203 first planar branching element of the second planar duplex combining/branching circuit 2
204 first planar combining element thereof
205 second planar combining element thereof
206 third planar combining element thereof
207 second planar branching element thereof
208 third planar branching element thereof
209 first planar inlet of the second planar duplex combining/branching circuit 2
210 first planar outlet thereof
211 second planar inlet thereof
212 second planar outlet thereof
213 third planar inlet thereof
214 third planar outlet thereof

## Claims

Circuit arrangement of an integrated coupling circuit for duplex optical communications in distributed processor networks, with multifold access at bidirectional lines and with two wave guides,
**characterized in that**
the optical planar integrated circuit comprises at least
a first planar duplex combining/branching circuit (1) formed
- by a first planar branching element (103) which is connected by its first outlet (131) to a second inlet (152) of a second planar combining element (105) and by its second outlet (132) to a second inlet (162) of a third planar combining element (106)
- a second planar branching element (107) which is by its first outlet (171) connected to a first inlet (151) of the second planar combining element (105) and by its second outlet (172) to a first inlet (141) of a first planar combining element (104),
- a third planar branching element (108) which is connected by its first outlet (181) to a first inlet (161) of the third planar combining element (106) and by its second outlet (182) to a second inlet (142) of the first planar combining element (104)

wherein the first planar duplex combining/branching circuit (1) comprises

- a first planar inlet/outlet (109, 110) formed by the inlet of the first planar branching element (103) and the outlet of the first planar combining element (104) respectively, which are connected to a first optical fiber circuit (A) and

- a second planar inlet/outlet (111, 112) formed by the inlet of the second planar branching element (107) and the outlet of the third planar combining element (106) respectively which are connected to a second optical fiber circuit (B) and

- a third planar inlet/outlet (113, 114) which is formed by the inlet of the third planar branching element (108) and by the outlet of the second planar combining element (105) respectively which are connected either directly to a third optical fiber circuit (C) or in case of an extension of the planar integrated circuit by way of a planar coupling to a first planar outlet/inlet (210, 209) of a second planar duplex combining/branching circuit (2) comprising three planar combining elements (204, 205, 206) and three planar branching elements (203, 207, 208), their interconnection being identical with the interconnection of the planar combining and branching elements of the first planar duplex combining/branching circuit (1) whereby the second planar inlet/outlet (211, 212) of said second planar duplex combining branching circuit (2) is connected to the third optical fiber circuit (C) and its third planar inlet/outlet (213, 214) is connected either to a fourth optical fiber circuit (D) or in case of a further extension of the optical integrated circuit by a planar coupling to the first outlet/inlet of a following planar duplex combining/branching circuit (N).

0 274 750